# EUROPÄISCHE PATENTSCHRIFT

(11) **EP 1 339 954 B1**
(45) Veröffentlichungstag und Bekanntmachung des Hinweises auf die Patenterteilung: **04.10.2006**
(21) Anmeldenummer: 01901162.6
(22) Anmeldetag: 18.01.2001
(51) Int. Cl.: F01M 11/00

(54) **METALLÖLWANNE MIT INTEGRIERTEM ÖLFILTER**
METAL OIL PAN WITH AN INTEGRATED OIL FILTER
CARTER D'HUILE METALLIQUE A FILTRE A HUILE INTEGRE

(30) Priorität: 08.12.2000 DE 10061204; 08.12.2000 DE 10061209
(43) Veröffentlichungstag der Anmeldung: 03.09.2003
(73) Patentinhaber: IBS Filtran Kunststoff-/Metallerzeugnisse GmbH, 51597 Morsbach (DE)
(72) Erfinder: ROSENDAHL, Marco, 51674 Wiehl (DE); BEER, Markus, 51597 Morsbach (DE)
(74) Vertreter: Lang, Friedrich
(86) Internationale Anmeldenummer: PCT/EP2001/000525
(87) Internationale Veröffentlichungsnummer: WO 2002/046584

(56) Entgegenhaltungen:
- DE-A- 19 735 444
- DE-B- 1 217 799
- GB-A- 1 113 259
- US-A- 4 136 011
- US-A- 6 143 169

## Beschreibung

Gegenstand der Erfindung ist eine Ölwanne aus Metall für Motoren oder Getriebe mit integriertem Ölfilter, der als Saug- oder Druckölfilter betrieben werden kann.

Ölfilter in Motoren und Getrieben werden zur Reinigung des für die Schmierung des Motors bzw. Getriebes verwendeten Öls eingesetzt. Aus dem Stand der Technik sind verschiedene Arten von Ölfiltern für Motoren oder Getriebe bekannt. Sie bestehen im allgemeinen aus einem flachen Filtergehäuse mit zwei Halbschalen. Zwischen diesen beiden Halbschalen ist ein scheibenförmiges oder als Tasche geformtes oder ein faltenförmiges Filtermedium befestigt. Als Filtermedien werden Metallsiebe, Papierfilter oder auch Polyesterfilterfilze eingesetzt. Die luftdicht miteinander verbundenen Filterhalbschalen können aus Metall oder Kunststoff sein.

Üblicherweise erfolgt die Ölfiltrierung bei einem Motor oder Automatikgetriebe durch separat außerhalb der Ölwanne angeordnete Filter. Hierbei werden Filter, Ölwannendichtung und die Ölwanne als Einzelkomponenten verwendet. Die Ölwanne besteht üblicherweise aus Metall. So werden im allgemeinen tiefgezogener Stahl oder Aluminium-Magnesium Gusslegierungen verwendet.

Die Anordnung der Ölfilter muss bestimmten Anforderungen genügen. So müssen sie bei Wartungsarbeiten möglichst leicht zugänglich sein und auf einfache Weise ausgetauscht bzw. entfernt werden können. Dies wird meist dadurch erzielt, dass die Ölfilter aus der Ebene des Motors herausragend angeordnet werden. Da der Platzbedarf für den Ölfilter nicht zu groß werden darf, ist die Größe der Ölfilter insbesondere bei Motorfiltern sehr begrenzt. Sie weisen daher eine geringe Filteroberfläche auf, so dass sie relativ schnell verschmutzt sind und häufig ausgewechselt werden müssen. Bei Automatikgetrieben hingegen gibt es schon Filtersysteme, die als Lebensdauerfilter angelegt sind.

Bei der Neukonstruktion von Motoren und Getrieben ist im allgemeinen der zur Verfügung stehende Raum innerhalb des Motorraumes knapp bemessen.

Raumeinnehmende Konstruktionen, insbesondere für aus der Ebene des Motors herausragenden Ölfilterkonstruktionen, sind unerwünscht und nachteilig.

Um diese Nachteile zu vermeiden wurden in neuerer Zeit Ölfilter entwickelt, die in der Ölwanne von Motoren oder Getrieben integriert werden. Eine solche Integration hat den Vorteil, dass der zur Verfügung stehende Raum in der Ölwanne, die ansonsten nur zur Aufnahme des nicht im Motor oder Getriebekreislauf befindlichen Öls vorgesehen ist, sinnvoll genutzt werden kann. So beschreibt das deutsche Patent 197 35 444.0 entsprechende Anordnungen von Ölfiltereinsätzen in einer Ölwanne. Die DE 197 35 445.9 beschreibt die Integration eines Saugölfilters in einer Ölwanne aus Kunststoff.

Bei der Integration der Ölfilter in die Ölwannen tritt jedoch das Problem auf, dass Ölwannen häufig aus Metall gefertigt sind, während die Filtereinsätze im allgemeinen aus Kunststoff bestehen. Für eine störungsfreie Funktion des Ölfilters in der Ölwanne ist es unabdingbar, dass die Verbindung von Filtereinsatz und Ölwanne dauerhaft dicht und auch über hohe Temperaturbereiche haltbar ist. Dabei muss man sich vergegenwärtigen, dass die Temperaturbelastungen im Kraftfahrzeug je nach geographischem Standort des Benutzers und Temperatur des Öls zwischen - 40 und + 100 °C liegen können. Auf Grund der unterschiedlichen physikalischen Eigenschaften der Materialien Metall und Kunststoff ist es daher äußerst problematisch diese Materialien so zusammenzufügen, dass eine Ölwanne mit Ölfiltereinsatz geschaffen wird, der eine lebenslange Ölfiltrierung bei einwandfreier Funktion und Dichtheit gewährleistet.

Die technische Aufgabe der Erfindung war es daher, eine Ölwanne aus Metall für Motoren oder Getriebe mit einem in der Ölwanne angeordneten Ölfiltermedium zur Verfügung zu stellen, die die oben genannten Nachteile vermeidet, insbesondere eine dauerhafte und störungsfreie Ölfiltrierung ermöglicht und auch bei großen Temperaturschwankungen ausreichende und dauerhafte Dichtheit aufweist.

Diese technische Aufgabe wird gelöst durch eine Ölwanne aus Metall für Motoren oder Getriebe mit einem in der Ölwanne angeordneten Ölfiltermedium, wobei ein Teil der Ölwanne den Boden eines Ölfiltergehäuses und eine Kunststoffhalbschale eine Abdeckung des Ölfiltergehäuses bildet und das Ölfiltermedium zwischen der Ölwanne und der Kunststoffhalbschale angeordnet ist, wobei die Ölwanne an ihrem Rand Metallnieten aufweist und die Kunststoffhalbschale an ihrem Rand Bohrungen aufweist über die die Kunststoffhalbschale an der Metallölwanne befestigt ist. Als Ölfiltermedium wird nachfolgend die Einheit bestehend aus Ölfiltereinsatz mit dem daran angebrachten Ölfiltermaterial verstanden.

In einer alternativen Ausführungsform besitzt die Kunststoffhalbschale einen metallischen Rahmen, über den die Kunststoffhalbschale mit der Metallölwanne über eine elektromechanische Verbindung verbunden ist. Dies erfolgt in bevorzugter Weise durch punktuelles Verschweißen des metallischen Rahmens mit dem Rahmen der Metallölwanne. Der metallische Rahmen besteht besonders bevorzugt aus Kupfer.

In einer bevorzugten Ausführungsform ist das Ölfiltermedium in einem Trägerrahmen, der vorzugsweise aus Kunststoff besteht, angeordnet. Dieser Trägerrahmen ist in bevorzugter Weise mit der Kunststoffhalbschale verbunden. Üblicherweise wird das Filtermedium mit dem Trägerrahmen, der aus Kunststoff besteht, umspritzt und danach mit der Kunststoffhalbschale, die ebenfalls aus Kunststoff besteht, verbunden.

In einer weiteren bevorzugten Ausführungsform ist der Trägerrahmen, die Kunststoffhalbschale und die Ölwanne an ihren Rändern verbördelt.

Es ist weiterhin bevorzugt als Metallnieten mit Kupfer beschichtete Aufschweißhohlnieten zu verwenden. Diese Aufschweißhohlnieten befinden sich am äußeren Rand der Ölwanne oder werden am Boden der Ölwanne angeordnet. Die Kunststoffhalbschale verfügt an ihrem Rand über Bohrungen, so dass die Kunststoffhalbschale auf einen Teilbereich der Ölwanne aufgesetzt werden kann und die Metallnieten an der Ölwanne durch die Bohrungen geführt werden. Es folgt dann das Verschweißen der Nieten, so dass die Ölwanne und die Kunststoffhalbschale fest verbunden werden. Es ist weiterhin bevorzugt zwischen Ölwanne und Kunststoffhalbschale Dichtungen einzusetzen. Diese werden bevorzugt am Trägerrahmen befestigt. Als Dichtungen werden in bevorzugter Weise Profildichtungen, Flachdichtungen und Rundschnurdichtungen eingesetzt.

Die an der Ölwanne angeordneten Nieten können in beliebiger Anzahl, Form und Position angeordnet werden, je nach Form der verwendeten Kunststoffhalbschale und der entsprechenden Ölwanne.

Es ist weiterhin bevorzugt, dass Fließrippen und/oder Abstützrippen in der Kunststoffhalbschale und/oder am Trägerrahmen angeformt sind. Mit diesen erfolgt eine Abstützung des Filtermediums und der Kunststoffhalbschale gegen die Ölwanne. Darüber hinaus können zur Abstützung der Kunststoffhalbschale zur Metallölwanne auch an der Kunststoffhalbschale angeordnete Abstandsdome vorhanden sein, die durch das Filtermedium durchdringen oder mit diesem fest verbunden sind.

Die Herstellung der erfindungsgemäßen Ölwanne erfolgt durch folgende Schritte. Zunächst wird das Filtermedium mit Kunststoff umspritzt, so dass ein Trägerrahmen für das Filtermedium entsteht. Der Trägerrahmen wird dann mit der Kunststoffhalbschale verbunden. Der Trägerrahmen wird mit einem Dichtungsmedium versehen. Die Kunststoffhalbschale wird dann auf den Teilbereich der Metallölwanne, die mit den Aufschweißhohlnieten versehen ist, aufgesetzt, so dass die Nieten am Rand des entsprechenden Teilbereichs der Metallölwanne durch die am Rand der Kunststoffhalbschale angeordneten Bohrungen geführt werden. Es erfolgt dann die Verschweißung der Nieten, so dass die Kunststoffhalbschale fest mit dem Teilbereich der Ölwanne verbunden wird.

Die erfindungsgemäße Ölwanne mit integriertem Ölfiltermedium kann für eine Saug- oder Druckölfiltration eingesetzt werden.

Eine derartige Integration des Ölfiltergehäuses in der Ölfilterwanne hat den Vorteil, dass eine separate Anordnung des Ölfiltergehäuses im Motorraum entfällt und dadurch im Motorraum mehr Raum für andere Motorteile zur Verfügung steht.

Weiterhin wird der nicht genutzte Raum in der Ölwanne durch Integration des Ölfiltergehäuses in sinnvoller Weise genutzt.
Die beschriebene Verbindung zwischen der Kunststoffhalbschale und der Metallölwanne über Metallnieten bzw. einen metallischen Rahmen der verschweißt wird, ermöglicht eine feste und dauerhafte Verbindung der Metallölwanne mit der Kunststoffhalbschale. So entsteht damit eine kompakte Baugruppe, die eine für die gesamte Lebensdauer des Fahrzeugs funktionierende und beständige Filtration des Öls ermöglicht, so dass ein häufiger Wechsel des Ölfilters entfällt. Die Filteroberfläche kann sogar so ausgelegt werden, dass ein Wechsel des Filters während der durchschnittlichen Lebensdauer des entsprechenden Fahrzeuges nicht mehr notwendig ist.

Ein weiterer Vorteil der Erfindung ist, dass die Anzahl der benötigten Einzelteilkomponenten erheblich minimiert wird. Dies führt zu einer Verringerung des gesamten Fahrzeuggewichtes und zu einer erheblichen Vereinfachung und Kostenreduzierung bei der Produktion. Gemäß der Erfindung wird ein Teil mit Ölwanne und Ölfiltermedium eingesetzt, währenddessen im Stand der Technik nicht nur die Ölwanne, sondern auch der Ölfilter als getrennte Teile in das Fahrzeug eingebaut werden müssen.

Die nachfolgenden Figuren sollen den Gegenstand der Erfindung näher erläutern.

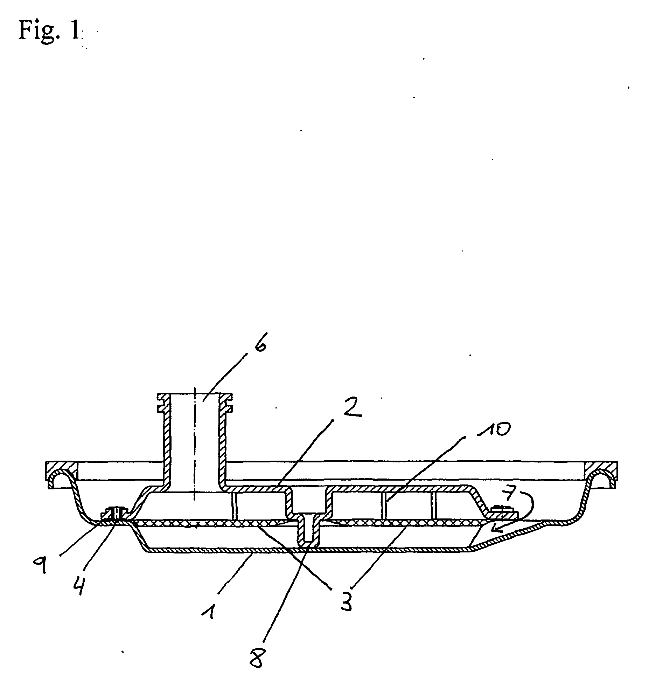

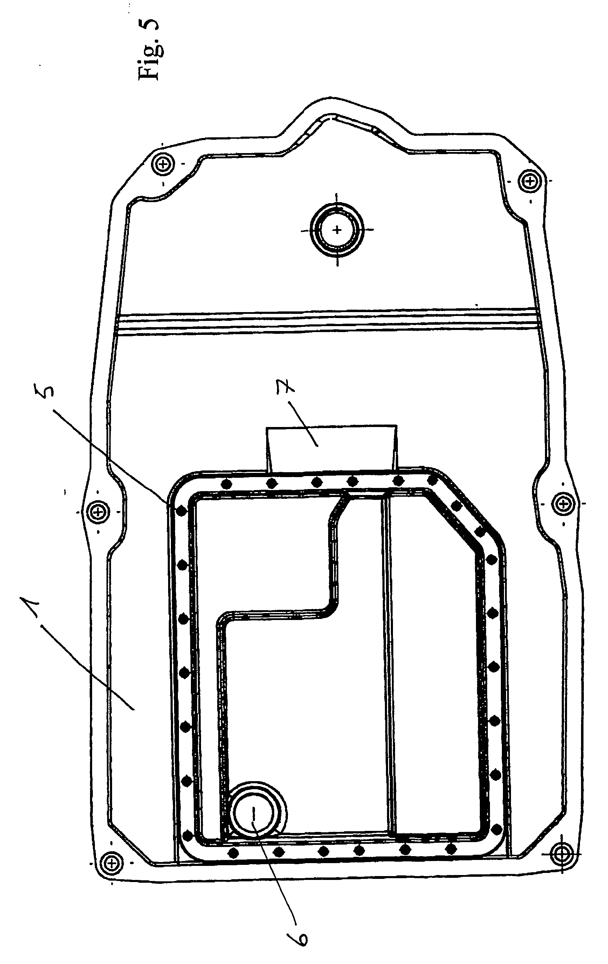

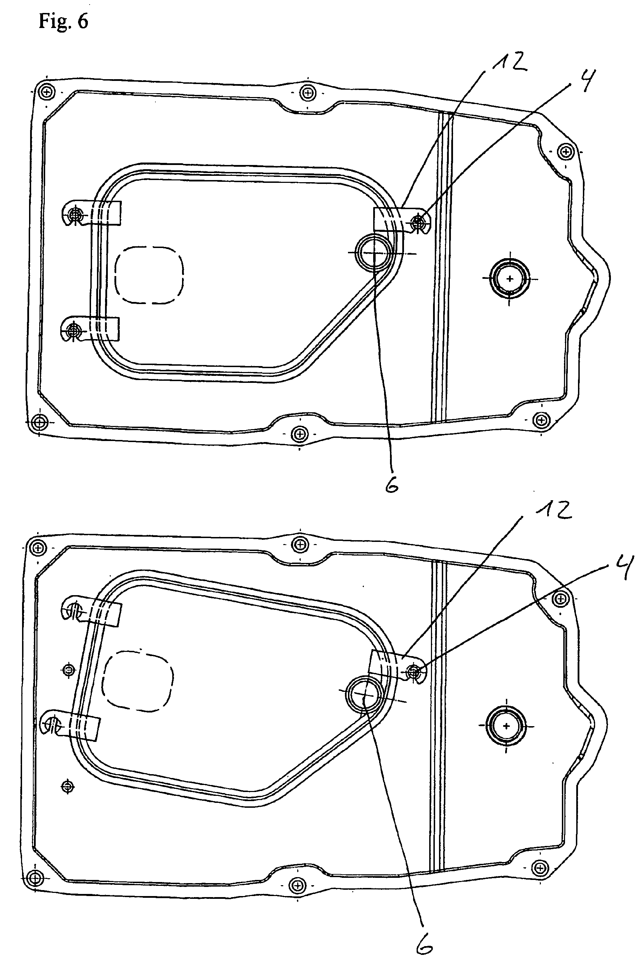

Die Figuren 1 bis 4 und 7 zeigen verschiedene Ansichten im Querschnitt von unterschiedlichen Ausführungsformen der erfindungsgemäßen Ölwanne. Figuren 5 und 6 zeigen Aufsichten auf die erfindungsgemäße Ölwanne.

Figur 1 zeigt eine Querschnittsansicht. Die Ziffer 1 bezeichnet die Ölwanne aus Metall, die Ziffer 2 die Kunststoffhalbschale, die über die Metallnieten an der Ölwanne befestigt ist. Das Ölfiltermedium ist zwischen Kunststoffhalbschale und Boden der Metallölwanne angeordnet. Es erfolgt eine direkte Verbördelung des Filtermaterials mit der Ölwanne und der Kunststoffhalbschale am Rande mit Hilfe der Metallvernietung. In einer bevorzugten Ausführungsform ist zwischen Kunststoffhalbschale und Metallölwanne eine Dichtung vorgesehen, die in der Abbildung nicht gezeigt wird.

Mit der Ziffer 8 wird eine Abstützung der Kunststoffhalbschale am Boden der Ölwanne gezeigt. Der Öleinlass bei dieser Ausführungsform ist durch die Ziffer 7 angedeutet und befindet sich auf der rechten Seite des Ölfilters unterhalb des Ölfiltermediums. Das Öl fließt dann von unten nach oben durch das Filtermedium zum Ölauslass. Es sind weiterhin Abstützrippen 10 vorgesehen, die die stabile Positionierung des Ölfiltermediums gewährleisten.

Die Ziffer 9 bezeichnet die Verbördelung zwischen Ölwanne, Kunststoffhalbschale und Filtermedium.

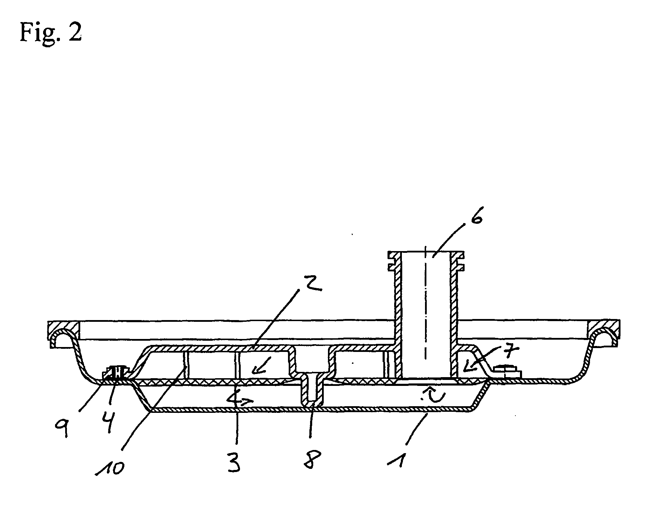

Figur 2 beschreibt eine Querschnittsansicht der erfindungsgemäßen Ölwanne, die sich von Figur 1 dadurch unterscheidet, dass der Ölfluss von oben nach unten erfolgt. Der Öleinlass ist mit der Ziffer 7 bezeichnet und liegt oberhalb des Filtermediums. Das Öl fließt dann von oben nach unten durch das Filtermedium und wird am Boden der Ölwanne gesammelt. Da der Ölauslassstutzen bis zum Boden der Ölwanne geführt wird kann von dort das Öl über den Ölauslass wieder in den Motor oder Getriebekreislauf zurückgeführt werden.

Die Ausführungsformen in Figuren 1 und 2, die durch die verschiedenen Ölfließrichtungen durch das Filtermedium gekennzeichnet sind werden je nach Aufbau und Form der verwendeten Ölwanne und auch aus Platzgründen eingesetzt. Auf diese Art und Weise ist ein beliebige Anpassung des Ölfiltereinsatzes und der Ölfließrichtung an die Notwendigkeiten der vorgeformten Ölwanne möglich.

Um eine ausreichende Dichtheit der Vernietung zu gewährleisten werden in bevorzugter Weise Dichtelemente oder Kleber am Rand verwendet. Weiterhin bevorzugt ist es, dass die Metallnieten über einen Absatz verfügen, der am unteren und/oder am oberen Ende der Metallnieten angeordnet ist.

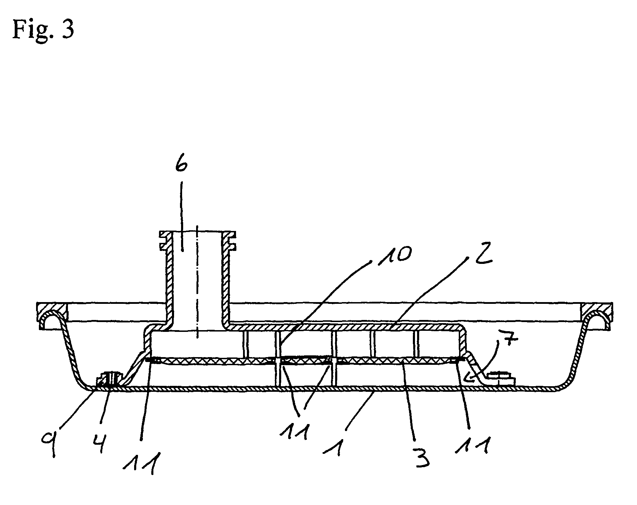

Figur 3 beschreibt eine weitere Ausführungsform der erfindungsgemäßen Ölwanne. In dieser Ausführungsform wird das Filtermedium in einem Trägerrahmen gehalten. Dieser Trägerrahmen besteht üblicherweise aus Kunststoff, so dass das Filtermedium mit diesem Kunststoff umspritzt werden kann. Der Trägerrahmen wird dann mit der Kunststoffhalbschale verbunden, so dass eine direkte Verbindung des Filtermediums mit der Kunststoffhalbschale wie in den Figuren 1 und 2 nicht notwendig ist. Dies hat den Vorteil, dass eine direkte Verbindung Kunststoff-Kunststoff vorgenommen werden kann. Weiterhin ist durch dieser Maßnahme die Fläche des für die Filtrierung zur Verfügung stehenden Filtermediums erhöht. Auch wird die konfektionierte Herstellung des entsprechenden Filtermedium ermöglicht.

Auch in dieser Ausführungsform erfolgt der Einlass des Öles gemäß Ziffer 7 unterhalb des Filtermediums, das Öl wird dann durch das Filtermedium nach oben zum Ölauslass geführt. Mit der Ziffer 10 sind wiederum Abstützrippen bezeichnet, die die stabile Positionierung des Filtermediums gewährleisten.

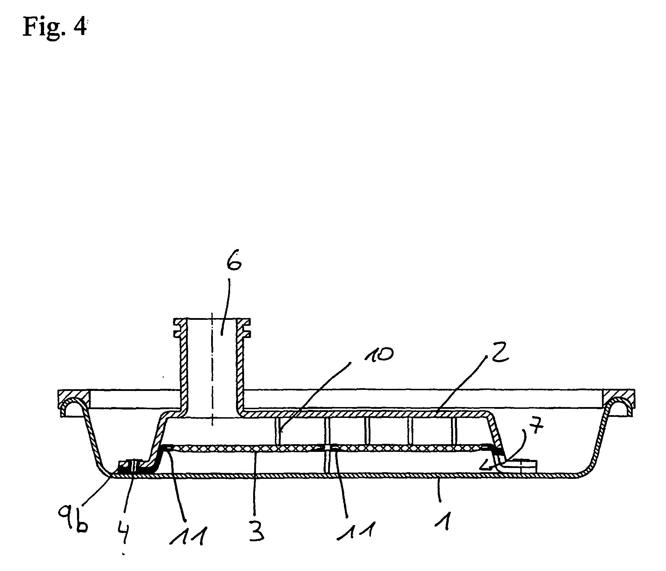

Figur 4 zeigt eine weitere Ausführungsform der erfindungsgemäßen Ölwanne. In Figur 4 ist der Trägerrahmen nicht mit der Kunststoffhalbschale verbunden, sondem direkt über eine Verlängerung mit Metallölwanne und Kunststoffhalbschale verbördelt. Diese Maßnahme gewährleistet ebenfalls eine hohe Dichte der Verbindung zwischen Ölwanne und Kunststoffhalbschale.

Figur 5 schließlich zeigt eine Aufsicht auf die erfindungemäße Ölwanne mit dem Ölfiltereinsatz der gemäß Ziffer 5 Bohrungen aufweist. Mit der Ziffer 7 ist der Öleinlass bezeichnet, mit der Ziffer 6 der Ölauslass.

Figur 6 schließlich zeigt zwei Aufsichten mit unterschiedlichen Anordnungen des Ölfiltermediums 3 in der Ölwanne 1. Hierbei sind an dem Ölfiltereinsatz Befestigungslaschen 12 angeformt, die sich durch die Auslegung und Positionierung an der Aufschweißhohlniete 5 einrasten lassen und so den Filter in allen Richtungen fest in die Ölwanne positionieren. Die als Clip ausgeführte Haltelasche 11 kann sich radial sowie axial sichern und gewährleistet so eine feste Verbindung des Ölfiltereinsatzes in der Ölwanne.

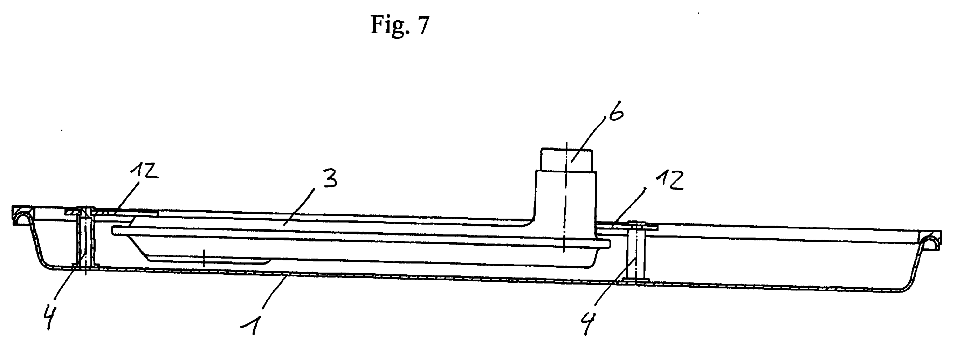

Figur 7 zeigt die entsprechende Ansicht der Ausführungsform gemäß Figur 6 in einer Querschnittsansicht. Mit der Ziffer 6 wird der Ölauslass bezeichnet. Die Ziffer 4 bezeichnet die Metallnieten, die am Boden der Ölwanne 1 befestigt sind. Am Ölfiltereinsatz sind die Befestigungslaschen 12 angeordnet, die an die Aufschweißhohlnieten 4 einrasten und so eine feste Verbindung zwischen Ölfiltereinsatz und Ölwanne herstellen.

Durch die Anordnung werden folgende Vorteile erzielt. Ölwanne und Filter bilden eine feste Einheit und der Filter wird bei Montage sowie bei Demontage gut gehalten. Eine Befestigung des Filters am Getriebegehäuse entfällt. Der Filter ist demontierbar, also auch austauschbar. Weiterhin entstehen durch die feste Verbindung von Filtereinsatz und Ölwanne keine Vibrationsgeräusche, die bei den Varianten, bei denen der Filter lose auf der Ölwanne aufliegt.

Die Abstützung der Kunststoffhalbschale zur Metallwanne erfolgt im allgemeinen durch ein am Filtermedium fest und dicht verschweißtes Einzelteil wie untereinander verbundene Abstandsdome oder einen Kunststoffrahmen mit angeformten Abstandsdomen und/oder Fließrippen. Anstatt der Aufschweißhohlnieten kann ein in die Kunststoffhalbschale eingelassener oder eingebetteter metallischer Rahmen verwendet werden, der beidseitig an definierten Stellen aus der Kunststoffhalbschale herausragt um punktuell eine elektromechanische Verbindung zur Metallölwanne zu ermöglichen.

Die Ölführung kann von unten durch den Filter mittels einer an der Metallölwanne angeformten Ölansaugöffnung und entsprechenden Freimachungen an der Kunststoffhalbschale und/oder dem Filterträgerrahmen nach oben durch das Filtermedium zur Kunststoffhalbschale durch eine an der Kunststoffhalbschale angeformte Auslassdichtung zur Saugseite der Ölpumpe geführt werden. Eine weitere Möglichkeit des Ölflusses besteht darin, dass der Ölfluss von oben durch die Kunststoffhalbschale durch das Filtermedium oberhalb der Metallölwanne geleitet wird und dann durch ein bis in den unteren Filterraum zu einer von der Saugseite der Pumpe geführten Rohr oder Kanal geleitet wird, durch den das Öl abgesaugt werden kann.

### Bezugszeichenliste

- 1: Ölwanne
- 2: Kunststoffhalbschale
- 3: Ölfiltermedium als Ölfiltereinsatz
- 4: Metallnieten
- 5: Bohrungen
- 6: Ölauslass
- 7: Öleinlass
- 8: Abstützung Kunststoffhalbschale Bodenölwanne
- 9: Verbördelung Ölwanne/ Kunststoffhalbschale/ Filtermedium
- 9a: Verbördelung Ölwanne/ Kunststoffhalbschale
- 9b: Verbördelung Ölwanne/ Kunststoffhalbschale/ Trägerrahmen
- 10: Abstützrippen
- 11: Trägerrahmen für Ölfiltermedium
- 12: Befestigungslasche

## Patentansprüche

1. Ölwanne (1) aus Metall für Motoren oder Getriebe mit einem in der Ölwanne angeordneten Ölfiltermedium (3), wobei ein Teil der Ölwanne (1) den Boden eines Ölfiltergehäuses und eine Kunststoffhalbschale (2) eine Abdeckung des Ölfiltergehäuses bildet und das Ölfiltermedium (3) zwischen der Ölwanne (1) und der Kunststoffhalbschale (2) angeordnet ist, wobei die Ölwanne (1) an ihrem Rand Metallnieten (4) aufweist und die Kunststoffhalbschale (2) an ihrem Rand Bohrungen (5) aufweist über die die Kunststoffhalbschale (2) an der Metallölwanne (1) befestigt ist.

2. Ölwanne (1) aus Metall für Motoren oder Getriebe mit einem in der Ölwanne angeordneten Ölfiltermedium(3), wobei ein Teil der Ölwanne (1) den Boden eines Ölfiltergehäuses und eine Kunststoffhalbschale (2) eine Abdeckung des Ölfiltergehäuses bildet und das Ölfiltermedium (3) zwischen der Ölwanne (1) und der Kunststoffhalbschale (2) angeordnet ist, wobei die Kunststoffhalbschale (2) einen metallischen Rahmen besitzt über den die Kunststoffhalbschale (2) mit der Metallölwanne (1) über eine elektromechanische Verbindung verbunden ist.

3. Ölwanne nach Anspruch 1 oder 2, **dadurch gekennzeichnet, dass** das Ölfiltermedium (3) in einem Trägerrahmen (11) angeordnet ist.

4. Ölwanne nach den Ansprüchen 1 bis 3, **dadurch gekennzeichnet, dass** der Trägerrahmen (11) mit der Kunststoffhalbschale (2) verbunden ist.

5. Ölwanne nach den Ansprüchen 1 bis 4, **dadurch gekennzeichnet, dass** der Trägerrahmen(11), die Kunststoffhalbschale (2) und die Ölwanne (1) verbördelt sind.

6. Ölwanne nach den Ansprüchen 1 bis 5, **dadurch gekennzeichnet, dass** die Metallnieten (4) mit Kupfer beschichtete Aufschweißhohlnieten sind.

7. Ölwanne nach den Ansprüchen 1 bis 6, **dadurch gekennzeichnet, dass** am Trägerrahmen (11) Profildichtungen, Flachdichtungen, Rundschnurdichtungen angeordnet sind.

8. Ölwanne nach den Ansprüchen 1 bis 7, **dadurch gekennzeichnet, dass** die Nieten (4) am äußeren Rand der Metallölwanne (1) in beliebiger Anzahl, Form und Position angeordnet sind.

9. Ölwanne nach den Ansprüchen 1 bis 8, **dadurch gekennzeichnet, dass** Fließrippen und/oder Abstützrippen (10) in der Kunststoffhalbschale (2) und/oder am Trägerrahmen (11) angeformt sind.

10. Ölwanne nach den Ansprüchen 1 bis 9, **dadurch gekennzeichnet, dass** die Abstützung (8) der Kunststoffhalbschale (2) zur Metallölwanne (1) durch an der Kunststoffhalbschale angeordnete Abstandsdome (8) erfolgt, die durch das Filtermedium durchdringen oder mit diesem fest verbunden sind.

11. Ölwanne nach den Ansprüchen 1 bis 10, **dadurch gekennzeichnet, dass** an dem Ölfiltereinsatz (3) Befestigungslaschen (12) zur Positionierung des Ölfiltereinsatzes in der Ölwanne angeformt sind.

12. Verfahren zur Herstellung der Ölwanne gemäß Ansprüchen 1 bis 10 **gekennzeichnet durch** die folgenden Schritte:
das Filtermedium wird mit Kunststoff umspritzt, so dass ein Trägerrahmen für das Filtermedium entsteht,
der Trägerrahmen wird mit der Kunststoffhalbschale verbunden,
die Kunststoffhalbschale wird mit einem Dichtungsmedium versehen,
die Metallölwanne wird mit Aufschweißhohlnieten versehen, wobei die Aufschweißhohlnieten gemäß dem Konturverlauf der Kunststoffhalbschale positioniert werden,
die Kunststoffhalbschale mit den am Rand angeordneten Bohrungen wird auf die Metallölwanne aufgesetzt wird, so dass die Nieten **durch** die Bohrungen geführt sind,
elektromechanische Verbindung der Kunststoffhalbschale und der Ölwanne **durch** Vernietung.

## Claims

1. An oilpan (1) made of metal for engines or gearboxes with an oil filter medium (3) disposed in said oilpan, part of said oilpan (1) forming the bottom of an oil filter housing and a plastic half shell (2), a cover of said oil filter housing and said oil filter medium (3) being interposed between said oilpan (1) and said plastic half shell (2), said oilpan (1) having metal rivets (4) on its rim and said plastic half shell (2) having holes (5) on its rim through which the plastic half shell (2) is fastened to the metal oilpan (1).

2. An oilpan (1) made of metal for engines or gearboxes with an oil filter medium (3) disposed in said oilpan, part of said oilpan (1) forming the bottom of an oil filter housing and a plastic half shell (2), a cover of said oil filter housing and said oil filter medium (3) being interposed between said oilpan (1) and said plastic half shell (2), said plastic half shell (2) having a metal frame through which the plastic half shell (2) is connected to said metal oilpan (1) through an electromechanical connection.

3. The oilpan as set forth in claim 1 or 2, **characterized in that** the oil filter medium (3) is disposed in a carrier frame (11).

4. The oilpan as set forth in the claims 1 through 3, **characterized in that** the carrier frame (11) is connected to the plastic half shell (2).

5. The oilpan as set forth in the claims 1 through 4, **characterized in that** the carrier frame (11), the plastic half shell (2) and the oilpan (1) are flanged together.

6. The oilpan as set forth in the claims 1 through 5, **characterized in that** the metal rivets (4) are copper-coated hollow rivets to be welded on.

7. The oilpan as set forth in the claims 1 through 6, **characterized in that** profile joints, flat joints, toroidal sealing rings are disposed on the carrier frame (11).

8. The oilpan as set forth in the claims 1 through 7, **characterized in that** the rivets (4) are disposed in any number, shape and position on the outer rim of the metal oilpan (1).

9. The oilpan as set forth in the claims 1 through 8, **characterized in that** flow ribs and/or abutment ribs (10) are integrally formed with the plastic half shell (2) and/or with the carrier frame (11).

10. The oilpan as set forth in the claims 1 through 9, **characterized in that** abutment (8) of the plastic half shell (2) on the metal oilpan (1) is ensured through spacer domes (8) disposed on said plastic half shell, said spacer domes traversing the filter medium or being solidly connected therewith.

11. The oilpan as set forth in the claims 1 through 10, **characterized in that** brackets (12) for positioning the oil filter cartridge (3) in the oilpan are integrally formed with said oil filter cartridge.

12. A method of manufacturing the oilpan as set forth in the claims 1 through 10, **characterized by** the following steps:
plastic injection molding the filter medium so as to obtain a carrier frame for the filter medium,
connecting said carrier frame with the plastic half shell,
providing said plastic half shell with a sealing medium,
providing the metal oilpan with hollow rivets to be welded on, said hollow rivets being positioned along the contour of said plastic half shell,
placing onto said metal oilpan said plastic half shell with the holes disposed on its rim so that said rivets pass through said holes,
electromechanically connecting said plastic half shell and said oilpan by riveting.

## Revendications

1. Carter d'huile (1) en métal pour moteurs ou boîtes de vitesse avec un milieu filtrant (3) disposé dans le carter d'huile, une partie du carter d'huile (1) formant le fond d'un boîtier de filtre à huile tandis qu'une demi-coque en plastique (2) forme un couvercle pour le boîtier de filtre à huile et le milieu filtrant (3) du filtre à huile étant interposé entre le carter d'huile (1) et la demi-coque en plastique (2), le carter d'huile (1) comportant sur son bord des rivets (4) en métal et la demi-coque en plastique (2) comportant sur son bord des trous (5) par lesquels la demi-coque en plastique (2) est fixée au carter d'huile (1) en métal.

2. Carter d'huile (1) en métal pour moteurs ou boîtes de vitesse avec un milieu filtrant (3) disposé dans le carter d'huile, une partie du carter d'huile (1) formant le fond d'un boîtier de filtre à huile tandis qu'une demi-coque en plastique (2) forme un couvercle pour le boîtier de filtre à huile et le milieu filtrant (3) du filtre à huile étant interposé entre le carter d'huile (1) et la demi-coque en plastique (2), la demi-coque en plastique (2) possédant un cadre métallique par lequel la demi-coque en plastique (2) est reliée au carter d'huile (1) en métal par une liaison électromécanique.

3. Carter d'huile selon la revendication 1 ou 2, **caractérisé en ce que** le milieu filtrant (3) du filtre à huile est disposé dans un cadre porteur (11).

4. Carter d'huile selon les revendications 1 à 3, **caractérisé en ce que** le cadre porteur (11) est relié à la demi-coque en plastique (2).

5. Carter d'huile selon les revendications 1 à 4, **caractérisé en ce que** le cadre porteur (11), la demi-coque en plastique (2) et le carter d'huile (1) sont assemblés par clinchage.

6. Carter d'huile selon les revendications 1 à 5, **caractérisé en ce que** les rivets (4) en métal sont des rivets creux à souder revêtus d'une couche de cuivre.

7. Carter d'huile selon les revendications 1 à 6, **caractérisé en ce que** des joints profilés, des joints plats, des joints toriques sont disposés sur le cadre porteur (11).

8. Carter d'huile selon les revendications 1 à 7, **caractérisé en ce que** le nombre, la forme et la position des rivets (4) disposés sur le bord externe du carter d'huile (1) en métal sont indifférents.

9. Carter d'huile selon les revendications 1 à 8, **caractérisé en ce que** les nervures d'écoulement et/ou de support (10) sont issues de moulage dans la demi-coque en plastique (2) et/ou avec le cadre porteur (11).

10. Carter d'huile selon les revendications 1 à 9, **caractérisé en ce que** l'appui (8) de la demi-coque en plastique (2) contre le carter d'huile (1) en métal est assuré par des dômes d'écartement (8) disposés sur la demi-coque en plastique, ces dômes d'écartement traversant le milieu filtrant ou étant solidarisés de façon fixe à celui-ci.

11. Carter d'huile selon les revendications 1 à 10, **caractérisé en ce que** des pattes de fixation (12) destinées à positionner la cartouche filtrante (3) dans le carter d'huile sont issues de moulage avec la cartouche filtrante.

12. Procédé de réalisation du carter d'huile selon les revendications 1 à 10, **caractérisé par** les étapes suivantes :
on surmoule le milieu filtrant de plastique de manière à obtenir un cadre porteur pour le milieu filtrant,
on relie le cadre porteur avec la demi-coque en plastique,
on munit la demi-coque en plastique d'un milieu d'étanchéité,
on munit le carter d'huile en métal de rivets creux à souder que l'on positionne sur le contour de la demi-coque en plastique,
on pose la demi-coque en plastique avec les trous pratiqués dans son bord sur le carter d'huile en métal de manière à ce que les rivets traversent les trous,
on relie la demi-coque en plastique et le carter d'huile par une liaison électromécanique par rivetage.
